# EUROPÄISCHE PATENTSCHRIFT

(11) **EP 1 334 830 B1**
(45) Veröffentlichungstag und Bekanntmachung des Hinweises auf die Patenterteilung: **17.11.2004**
(21) Anmeldenummer: 02002829.6
(22) Anmeldetag: 08.02.2002
(51) Int. Cl.: B41F 31/02, F16J 15/32

(54) **Dichtung für Kammerrakel**
Seal for an ink rail device
Joint pour une chambre à racle

(43) Veröffentlichungstag der Anmeldung: 13.08.2003
(73) Patentinhaber: FISCHER & KRECKE GMBH & CO., 33609 Bielefeld (DE)
(72) Erfinder: Kolbe, Wilfried, Dr., 21483 Gülzow (DE); Schirrich, Klaus, 33729 Bielefeld (DE); Grüter, Lars, 33330 Gütersloh (DE)
(74) Vertreter: TER MEER STEINMEISTER & PARTNER GbR

(56) Entgegenhaltungen:
- DE-A- 4 241 792
- DE-A- 4 302 671
- DE-B- 1 224 327
- US-A- 4 581 995

## Beschreibung

Die Erfindung betrifft ein Farbwerk einer Druckmaschine mit einer Kammerrakel und einer Dichtung in der Form eines gummielastischen Körpers, der am Ende der Kammerrakel in einen Dichtungshalter eingesetzt ist und mit einer schräg angestellten Lippe an Rakelmessern der Kammerrakel und am Umfang einer Walze anliegt, gegen die die Kammerrakel angestellt ist.

Eine Kammerrakel dient beispielsweise in einer Flexodruckmaschine zum Einfärben einer Rasterwalze, die dann ihrerseits die Druckfarbe auf die Klischees auf dem Druckzylinder überträgt. Die Kammerrakel bildet eine in Längsrichtung der Rasterwalze verlaufende Kammer, die während des Druckbetriebs mit Druckfarbe gefüllt ist und auf der der Rasterwalze zugewandten Seite durch zwei Rakelmesser begrenzt wird, die schräg gegen den Umfang der Rasterwalze angestellt sind. Die Dichtungen, die Bestandteile der Erfindung sind, haben den Zweck, die Kammer an beiden Enden dicht abzuschließen. Die Dichtung muß folglich an der Umfangsfläche der rotierenden Rasterwalze anliegen und ist deshalb einer beträchtlichen mechanischen Beanspruchung sowie einem hohem Verschleiß ausgesetzt. Je steifer die Dichtung ist und je größer ist Kraft ist, mit der sie gegen die Rasterwalze angepreßt wird, desto höher ist die Dichtungswirkung, desto größer ist aber auch der Verschleiß aufgrund der Reibung der Rasterwalze. Umgekehrt können bei einer relativ weich ausgelegten Dichtung Leckagen nicht nur an der Berührungslinie zwischen Rasterwalze und Dichtung stattfinden, sondern auch zwischen der Dichtung und dem Dichtungshalter. Weiterhin wird die Dichtungsproblematik dadurch erschwert, daß es beim Betrieb der Druckmaschine zu einem Verschleiß an den Rakelmessem kommt und sich dabei die Geometrie des abzudichtenden Querschnitts verändert. Besonders leckanfällig sind daher die Stellen, an denen die Dichtung, die Rasterwalze und ein Rakelmesser aneinandergrenzen.

Aus der Praxis ist eine Dichtung der eingangs genannten Art bekannt, die auf ihrem Umfang, also sowohl auf der der Rasterwalze zugewandten Seite als auch auf der dem Dichtungshalter zugewandten Seite, eine umlaufende, schräg angestellte Lippe aufweist. Durch die Schrägstellung und das Profil der Lippe läßt sich die Nachgiebigkeit der Lippe so dosieren, daß ein geeigneter Kompromiß zwischen Dichtungseigenschaften, Verschleißanfälligkeit und Toleranzausgleichsfähigkeit erreicht wird.

Aus DE 1 224 327 B ist ein Farbwerk bekannt, bei dem die Kammerrakel in der Mitte geteilt ist und zwei in Axialrichtung aneinander angrenzende Mulden bildet. Zwischen diesen Mulden ist eine Dichtung eingefügt, die zwei Lippen aufweist, die zusammen einen V-förmigen Querschnitt bilden und jeweils zur Abdichtung einer der Mulden dienen.

Aufgabe der Erfindung ist es, die Dichtungseigenschaften einer Dichtung der eingangs genannten Art zu verbessern.

Diese Aufgabe wird erfindungsgemäß dadurch gelöst, daß die Dichtung eine zweite Lippe (24) aufweist, die mit der ersten einen V-förmigen Querschnitt bildet, und daß beide Lippen (24) an einem Ende der Walze (12) an deren Umfang und an den Rakelmessern (16) anliegen.

Durch die zweite Lippe wird nicht nur eine Redundanz und damit eine Verbesserung der Dichtungseigenschaften erreicht, sondern durch die V-förmige Konfiguration, die dazu führt, daß die beiden Lippen in entgegengesetzte Richtungen schräg angestellt sind, wird auch die Empfindlichkeit gegenüber wechselnden mechanischen Beanspruchungen erheblich herabgesetzt.

In der Praxis ist die Dichtung häufig einem wechselnden Druckgefälle zwischen dem Inneren der Kammerrakel und der Umgebung ausgesetzt. Während des Druckbetriebs herrscht in der Kammerrakel generell ein Überdruck, während beim Reinigen des Farbwerks, wenn die Kammerrakel mit einer Reinigungsflüssigkeit gespült wird, häufig ein Unterdruck in der Kammer auftritt. Bei der erfindungsgemäßen Dichtung haben diese wechselnden Druckbeanspruchungen stets den Effekt, daß eine der Lippen von der Rasterwalze weg geschwenkt wird, so daß ihre Dichtungswirkung vermindert ist, dafür jedoch die andere Lippe um so fester gegen die Rasterwalze angepreßt wird. Auf diese Weise wird unabhängig von der Richtung des Druckgefälles eine hohe Dichtungswirkung erreicht. Aufgrund desselben fekts wird auch eine größere Unempfindlichkeit der Dichtung gegenüber wechselnden Beanspruchungen erreicht, die beispielsweise durch ein Axialspiel der Rasterwalze und/oder durch Wärmeausdehnung der Rasterwalze entstehen könnten.

Vorteilhafte Ausgestaltungen der Erfindung ergeben sich aus den Unteransprüchen.

Bevorzugt sind die Lippen nicht nur in dem an der Rasterwalze anliegenden Teil der Dichtung ausgebildet, sondern auch in den Teilen, die an den Rakelmessern anliegen. Auf diese Weise wird eine hohe Nachgiebigkeit der Dichtung insbesondere an den Punkten erreicht, an denen die Umfangsfläche der Rasterwalze, die Dichtlippe und eines der Rakelmesser zusammenstoßen, so daß sich die Dichtlippe auch einem etwaigen Verschleiß an dem Rakelmesser gut anpassen kann.

In einer besonders bevorzugten Ausführungsform verlaufen die Berührungslinien der beiden Dichtlippen mit der Umfangsfläche der Rasterwalze parallel zueinander, während die Berührungslinien im Bereich der Rakelmesser nach außen schräg auseinanderlaufen. Die Dichtlippen liegen unter leichtem Druck am Umfang der Rasterwalze und den Rakelmessern an und werden dadurch leicht auseinander gebogen. Wenn es zu einem Verschleiß an der Kante des Rakelmessers kommt, so treten die schräg auseinander laufenden Teile der Berührungslinien der Dichtlippen mit der Rasterwalze in Reiberührung, und die Reibungskräfte sorgen dafür, daß die Dichtlippen in diesem Bereich wieder etwas aufgerichtet werden. Auf diese Weise wird speziell an dem Punkt, an dem die Umfangsfläche der rotierenden Rasterwalze spitz auf das Rakelmesser aufläuft, eine gute Anlage der Dichtlippe an der Rasterwalze und an dem Rakelmesser erreicht. Gerade an diesem Punkt ist eine gute Anlage der Dichtlippe besonders wichtig, weil die Druckfarbe durch die rotierende Rasterwalze mitgerissen wird und gegen die Schneide des Rakelmessers drängt, so daß an diesem Punkt eine gute Abdichtung gegen den dynamischen Druck der Druckfarbe erforderlich ist.

Der oben beschriebene Verlauf der Berührungslinien der Dichtlippen an der Rasterwalze und an den Rakelmessern wird bevorzugt dadurch erreicht, daß die Dichtung in ihrem der Rasterwalze zugewandten Teil insgesamt pyramidenförmig zur Rasterwalze hin verjüngt ist. Dies hat zugleich den Vorteil, daß sich die an der Rasterwalze anliegenden Teile der Dichtlippen je nach Andruckkraft mehr oder weniger weit auseinanderbiegen können, ohne daß sie an den Wänden des Dichtungshalters anstoßen.

Auf den Innenseiten werden die beiden Dichtlippen vorzugsweise durch eine V-förmige Kerbe begrenzt, die in Umfangsrichtung der Rasterwalze durch die Dichtung verläuft. Da die Oberflächenbereiche der Dichtung, auf denen die beiden Rakelmesser aufliegen, schräg vom Umfang der Rasterwalze abstreben, läuft die Kerbe in diesen Bereichen spitz aus, so daß der Querschnitt der Dichtlippen hier zu den Enden der Dichtung hin progressiv zunimmt. Auf diese Weise wird die Steifheit der Dichtlippen so gesteuert, daß die Dichtlippen im Bereich der Rasterwalze und an den Übergangsstellen zwischen der Rasterwalze und den Rakelmessern relativ nachgiebig sind, während sie in den Bereichen, die die Rakelmesser abstützen, steifer werden, so daß eine feste Anlage an den ortsfesten Rakelmessern erreicht wird.

An den Außenseiten der Dichtung werden die Dichtlippen vorzugsweise durch Taschen begrenzt, die in den Flanken des verjüngten Teils der Dichtung ausgebildet sind und sich auch in die Bereiche hinein erstrecken, in denen die Dichtung an den Rakelmessern anliegt. Durch die Geometrie dieser Taschen läßt sich die Steifheit der Dichtlippen nach Bedarf einstellen.

Vorzugsweise weisen die beiden Dichtlippen jeweils auf der Innenseite eine Hilfsdichtlippe auf, die in geringem Abstand parallel zum der Hauptkamm verläuft und im Bereich der Umfangsfläche der Rasterwalze für eine zusätzliche Abdichtung sorgt.

Der in dem Dichtungshalter aufgenommene Teil der Dichtung ist vorzugsweise als massiver, quaderförmiger Block ausgebildet, der an beiden Längsseiten und an einer Stirnseite von einer Schar umlaufender Toleranzausgleichslippen umgeben ist, die das Spiel zwischen dem Dichtungskörper und dem Dichtungshalter ausgleichen. Auf der anderen Stirnseite, und zwar auf der Seite, die in Rotationsrichtung der Rasterwalze gelegen ist, stützt sich die Dichtung dagegen vollflächig an der Wand der Rakelkammer ab. Die rotierende Rasterwalze hat die Tendenz, die Dichtung durch Reibungskräfte in Rotationsrichtung mitzunehmen, so daß die Dichtung fest gegen die betreffende Wand der Rakelkammer angedrückt wird. An dieser Stelle hat die vollflächige Anlage der Dichtung den Vorteil, daß die Abstützkräfte stabil aufgenommen werden können. An den drei übrigen Seiten, an denen die Toleranzausgleichslippen ausgebildet sind, verhält sich die Dichtung dagegen weicher, so daß auf dem gesamten Umfang eine gute Abdichtung an der Innenfläche des Dichtungshalters erreicht wird.

Zusätzlich weist die Dichtung zumindest an der Stirnseite eine rechtwinklig zu den dortigen Toleranzausgleichslippen verlaufende Rippe auf, die die zwischen den Toleranzausgleichslippen gebildeten Nuten versperrt und so verhindert, daß ) die Druckfarbe in diesen Nuten die Dichtung umfließt. Auf der entgegengesetzten Stirnseite, auf der die Dichtung vollflächig an der Rakelkammer anliegt, kann eine entsprechende Rippe durch die Teilungsnaht gebildet werden, die beim Herstellen der Dichtung mit Hilfe eines zweiteiligen Formwerkzeugs ohnehin entsteht. Auf diese Weise wird auch hier eine zuverlässige Abdichtung sichergestellt.

Im folgenden wird ein Ausführungsbeispiel der Erfindung anhand der Zeichnung näher erläutert.

Es zeigen:
- Fig. 1: einen Schnitt durch eine Kammerrakel mit einer erfindungsgemäßen Dichtung;
- Fig. 2: einen Schnitt längs der Linie II-II in Figur 1;
- Fig. 3: eine Seitenansicht der Dichtung;
- Fig. 4: einen vergrößerten Schnitt längs der Linie IV-IV in Figur 3; und
- Fig. 5: die Dichtung nach Figur 3 in der Draufsicht.

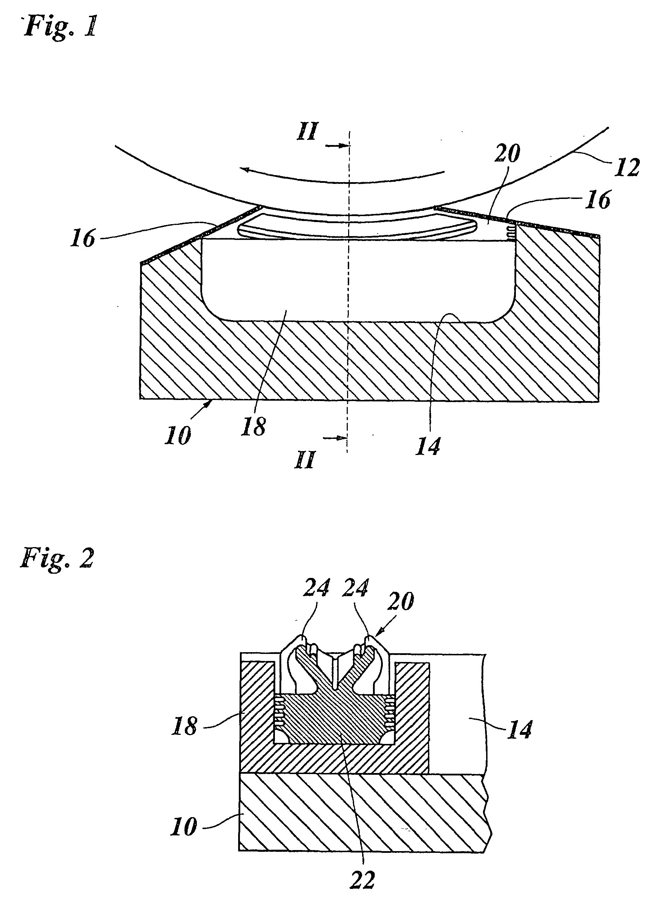

In Figur 1 ist im Querschnitt eine Kammerrakel 10 dargestellt, die an den Umfang einer im Uhrzeigersinn rotierenden Rasterwalze 12 angestellt ist. Die Kammerrakel 10 weist ein Rinnenprofil auf, durch das eine Kammer 14 begrenzt wird, die auf der der Rasterwalze 12 zugewandten Seite durch zwei dachförmig angeordnete Rakelmesser 16 sowie durch die Umfangsfläche der Rasterwalze 12 abgeschlossen ist. Die Rakelmesser 16 schaben jeweils mit einer Schneide am Umfang der Rasterwalze 12 entlang.

Die Kammer 14 ist an beiden Enden durch einen Dichtungshalter 18 und eine darin eingesetzte Dichtung 20 abgeschlossen. Der Dichtungshalter 18 ist flüssigkeitsdicht in das Rinnenprofil der Kammer 14 eingepaßt und bildet seinerseits eine quer zu diesem Rinnenprofil verlaufende U-förmige Rinne, in die die Dichtung 20 eingesetzt ist, wie deutlicher in Figur 2 zu erkennen ist.

Die Dichtung 20 besteht aus einem gummielastischem Material mit einer Shore-Härte von 60 bis 90, vorzugsweise mit Shore 80, und bildet einen quaderförmigen Sockel 22, der dicht in den durch den Dichtungshalter 18 und die Wände der Kammer 14 begrenzten Hohlraum eingepaßt ist. Auf der Oberseite, also der Seite, die der Rasterwalze 12 zugewandt ist, bildet die Dichtung zwei in Umfangsrichtung der Rasterwalze 12 verlaufende Lippen 24, die symmetrisch zueinander ausgebildet sind und zusammen einen V-förmigen Querschnitt bilden.

Diese Lippen 24 liegen dichtend an der Umfangsfläche der Rasterwalze 12 sowie an den Innenflächen der Rakelmesser 16 an. Der Winkel zwischen den Lippen 24 und der Oberseite des Sockels 22 beträgt jeweils etwa 50°, so daß die Lippen miteinander einen Winkel von etwa 80° einschließen.

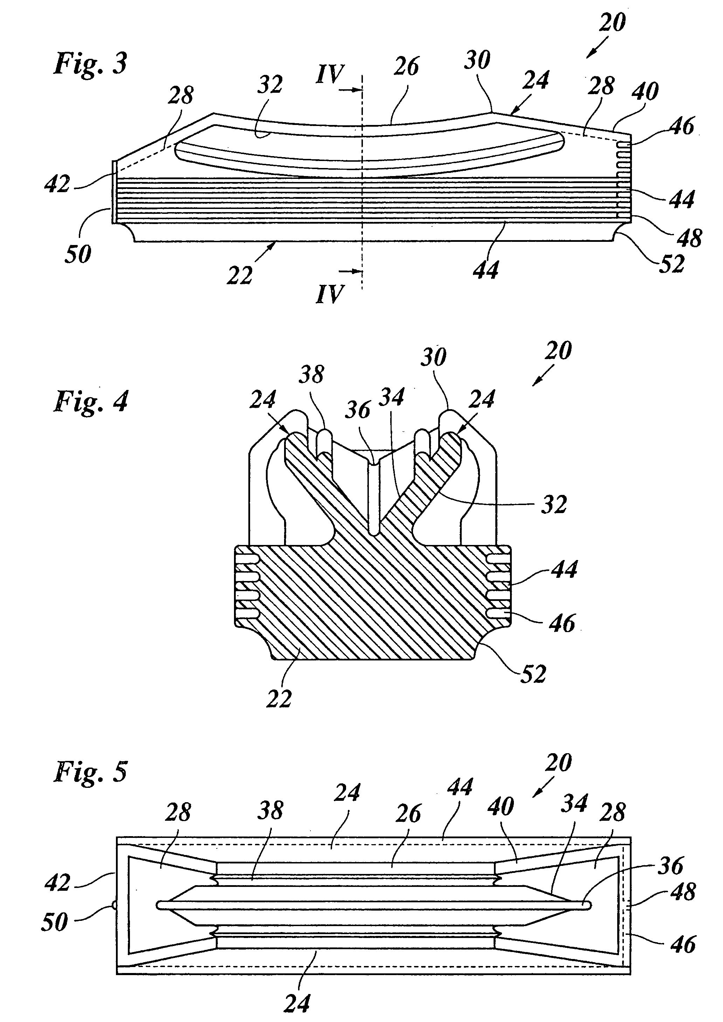

Die Dichtung 20 ist im einzelnen in Figuren 3 bis 5 dargestellt. Die Lippen 24 weisen in der Seitenansicht gemäß Figur 3 jeweils einen konkaven Mittelteil 26 auf, der an die Krümmung der Rasterwalze 12 angepaßt ist und an den sich an jedem Ende eine geradlinige Stützzone 28 für das betreffende Rakelmesser 16 anschließt. An den Übergangsstellen zwischen dem Mittelteil 26 und den Stützzonen 28 bildet der Hauptkamm jeder Lippe einen stumpfwinkligen Scheitel 30, der im Idealfall an der Stelle liegt, an der die Schneide des Rakelmessers die Rasterwalze berührt. Dieser Punkt läßt sich jedoch in der Praxis nicht genau bestimmen, weil sich das Rakelmesser im Laufe des Druckbetriebs abnutzt.

Die Lippen 24 werden jeweils auf der Außenseite durch eine Tasche 32 begrenzt, die der Kontur des konkaven Mittelteils 26 folgt, sich jedoch auch ein Stück weit unter die Stützzonen 28 erstreckt.

Wie Figur 4 zeigt, werden die beiden Lippen 24 auf der Innenseite durch eine V-förmige Kerbe 34 begrenzt, die der Krümmung des konkaven Mittelteils 26 folgend durch die Mitte der Dichtung verläuft und an deren Grund sich eine tiefere und schmalere Rille 36 befindet. Durch den Querschnitt der Kerbe 34 und die Tiefe der Rille 36 läßt sich die Steifheit der Lippen 24 einstellen.

Weiterhin weist jede Lippe 24 auf der Innenseite ihres Hauptkammes noch eine etwas kürzer ausgebildete Hilfslippe 38 auf. Wenn die Kammerrakel 10 gegen die Rasterwalze angestellt ist und die Lippen 24 mit leichtem Druck an der Rasterwalze 12 und den Rakelmessern 16 anliegen, so werden sie etwas auseinander gebogen. Auf diese Weise kommen - spätstens nach gewisser Abnutzung der Hauptkämme - auch die Hilfslippen 38 mit der Umfangsfläche der Rasterwalze 12 in Berührung.

Weiterhin ist in Figur 4 zu erkennen, daß der Teil der Dichtung 20, der die Lippen 24 bildet, zumindest in dem konkaven Mittelteil 26 eine geringere Breite aufweist als der Sockel 22. Wie deutlicher in der Draufsicht in Figur 5 zu erkennen ist, kommt diese geringere Breite dadurch zustande, daß der Teil der Dichtung 20, der die Lippen 24 bildet, insgesamt pyramidenförmig nach oben verjüngt ist. Die Stützzonen 28 haben daher eine trapezförmige Gestalt.

Wie weiterhin in Figur 5 zu erkennen ist, gehen die Hauptkämme der Lippen 24 in den Stützzonen 28 in einen leicht erhabenen Saum 40 über, der auf dem gesamten Umfangsrand der Dichtung umläuft. Mit ihren Hauptkämmen und dem Saum 40 bilden die beiden Lippen 24 somit eine geschlossene Berührungslinie, mit der sie dicht an der Rasterwalze und an den beiden Rakelmessern anliegen.

Die V-förmige Kerbe 34 läuft in den Stützzonen 28 in den schräg stehenden, flachen, trapezförmigen Oberflächen der Dichtung aus und nimmt daher dort in der Breite ab, so daß der Querschnitt und damit die Härte der Lippen 24 zu den Enden hin entsprechend zunimmt. Auf diese Weise wird einerseits eine ausreichende Härte der Lippen in den Zonen erreicht, die die Rakelmesser 16 abstützen, während andererseits eine ausreichende Nachgiebigkeit insbesondere an den Scheiteln 30 erreicht wird, so daß sich die Lippen 24 dort an die Übergangsstellen zwischen dem Umfang der Rasterwalze und den Rakelmessern anpassen können.

Der Sockel 22 der Dichtung bildet auf einer Stirnseite, links in Figuren 3 und 5, eine glatte Oberfläche 42, mit der sich die Dichtung stabil und vollflächig an der Wand der Kammer 14 abstützt, wenn die Dichtung den Reibungskräften der rotierenden Rasterwalze 12 ausgesetzt ist. An den drei übrigen Seiten ist der Sokkel 22 von mehreren umlaufenden Toleranzausgleichsrippen 44 umgeben, die durch Nuten 46 voneinander getrennt sind. Die Toleranzausgleichsrippen 44 gleichen die Maßtoleranzen zwischen der Dichtung 20 und dem Dichtungshalter 18 aus, so daß sich der Sockel 22 der Dichtung leicht und dennoch dicht in den Dichtungshalter 18 eindrücken läßt. An der Stirnseite, die der glatten Oberfläche 42 gegenüberliegt, sind die Nuten 46 durch eine Rippe 48 unterbrochen. Falls Druckfarbe in die Nuten 46 eingedrungen sein sollte, so wird durch die Rippe 48 verhindert, daß diese Druckfarbe in den Nuten 46 von der der Kammer 14 zugewandten Innenseite zur Außenseite der Dichtung fließt.

Eine vergleichbare Funktion hat auf der gegenüberliegenden Stirnseite 42 eine flache Rippe 50, die sich bei der Anlage an die Wand der Kammer 14 flachdrückt und so die Dichtungswirkung erhöht, ohne daß die stabile Abstützung der Dichtung an dieser Wand beeinträchtigt wird.

Bei der Dichtung 20 handelt es sich vorzugsweise um ein Formteil, das im Spritzgießverfahren hergestellt wird. Die Rippe 50 kann dann einfach durch eine Teilungsnaht zwischen den beiden Formhälften des Formwerkzeugs gebildet werden.

Am unteren Rand weist der Sockel 22 eine umlaufende Fase oder Hohlkehle 52 auf, die einen korrekten Sitz der Dichtung 20 in dem Dichtungshalter 18 auch dann ermöglicht, wenn sich in den Innenkanten des Dichtungshalters angetrocknete Farbreste angesammelt haben.

## Patentansprüche

1. Farbwerk einer Druckmaschine mit einer Kammerrakel (10) und einer Dichtung in der Form eines gummielastischen Körpers, der am Ende der Kammerrakel in einen Dichtungshalter (18) eingesetzt ist und mit einer schräg angestellten Lippe (24) an Rakelmessern (16) der Kammerrakel und am Umfang einer Walze (12) anliegt, gegen die die Kammerrakel angestellt ist, **dadurch gekennzeichnet**, da**ß** die Dichtung (20) eine zweite Lippe (24) aufweist, die mit der ersten einen V-förmigen Querschnitt bildet, und daß beide Lippen (24) an einem Ende der Walze (12) an deren Umfang und an den Rakelmessern (16) anliegen.

2. Farbwerk nach Anspruch 1, **dadurch gekennzeichnet, daß** die entgegengesetzten Enden der beiden Lippen (24) Stützzonen (28) für die Rakelmesser (16) bilden, die am Umfang der Walze (12) anliegen, und daß die Härte der Lippen (24) in den Stützzonen (28) zum Ende hin zunimmt.

3. Farbwerk nach Anspruch 2, **dadurch gekennzeichnet, daß** die Hauptkämme der Lippen (24) in den Stützzonen (28) in einen um die gesamte Dichtung umlaufenden Saum (40) übergehen, so daß eine geschlossene Berührungslinie zwischen der Dichtung (20) einerseits und der Walze (12) und den Rakelmessern (16) andererseits gebildet wird.

4. Farbwerk nach Anspruch 2 oder 3, **dadurch gekennzeichnet, daß** der Abstand zwischen den Hauptkämmen der Lippen (24) in der Mitte kleiner ist als an den Enden.

5. Farbwerk nach Anspruch 4, **dadurch gekennzeichnet, daß** der der Walze (12) zugewandte Teil der Dichtung (20) insgesamt pyramidenförmig ausgebildet ist und daß die beiden Lippen (24) auf der Innenseite durch eine V-förmige Kerbe (34) begrenzt werden, die in den Stützzonen (28) in die schräg stehenden Flächen der Pyramide ausläuft.

6. Farbwerk nach einem der Ansprüche 2 bis 5, **dadurch gekennzeichnet, daß** die Lippen (24) jeweils auf der Außenseite durch eine Tasche (32) begrenzt werden, die an jedem Ende ein Stück weit in die Stützzone (28) hineinreicht.

7. Farbwerk nach einem der vorstehenden Ansprüche, **dadurch gekennzeichnet, daß** jede Lippe (24) zumindest in dem an der Walze (12) anliegenden Bereich eine parallel zu ihrem Hauptkamm verlaufende Hilfslippe (38) aufweist.

8. Farbwerk nach einem der vorstehenden Ansprüche, **dadurch gekennzeichnet, daß** der in dem Dichtungshalter (18) aufgenommene Teil der Dichtung (20) als massiver quaderförmiger Sockel (22) ausgebildet ist, der an einer Stirnseite mit einer glatten Oberfläche (42) an der Kammerrakel (10) anliegt und an den drei übrigen Seiten von umlaufenden Toleranzausgleichslippen (44) umgeben ist.

9. Farbwerk nach Anspruch 8, **dadurch gekennzeichnet, daß** die zwischen den Toleranzausgleichslippen (44) gebildeten Nuten (46) auf der anderen Stirnseite des Sockels (22) durch eine rechtwinklig zu den Toleranzausgleichslippen (44) verlaufende Rippe (48) versperrt sind.

10. Farbwerk nach einem der vorstehenden Ansprüche, **dadurch gekennzeichnet, daß** die beiden Lippen (24) einen Winkel von etwa 80° miteinander einschließen.

## Claims

1. Inking unit of a printing press having a doctor blade chamber (10) and a seal in the form of an elastomeric member that is installed at the end of the doctor blade chamber in a seal holder (18) and with an obliquely set lip (24) abuts doctor blades (16) of the doctor blade chamber and the circumference of a roller (12), against which the doctor blade chamber is set, **characterised in that** the seal (20) comprises a second lip (24), which forms a V-shaped cross-section with the first lip, and **in that** both lips (24) at one end of the roller (12) abut the circumference thereof and abut the doctor blades (16).

2. Inking unit according to claim 1, **characterised in that** the opposing ends of the two lips (24) form supporting zones (28) for the doctor blades (16) that abut the circumference of the roller (12), and **in that** the hardness of the lips (24) in the supporting zones (28) increases towards the end.

3. Inking unit according to claim 2, **characterised in that** in the supporting zones (28) the main crests of the lips (24) merge into a seam (40) encircling the entire seal, so that a closed line of contact is formed between the seal (20) on the one hand and the roller (12) and the doctor blades (16) on the other hand.

4. Inking unit according to claim 2 or 3, **characterised in that** the distance between the main chambers of the lips (24) is smaller in the middle than at the ends.

5. Inking unit according to claim 4, **characterised in that** the portion of the seal (20) facing the roller (12) is as a whole of pyramid shape and **in that** the two lips (24) are bounded on the inside by a V-shaped notch (34), which in the supporting zones (28) runs out into the oblique surfaces of the pyramid.

6. Inking unit according to any one of claims 2 to 5, **characterised in that** the lips (24) are each bounded on the outside by a pocket (32), which extends at each end a little way into the supporting zone (28).

7. Inking unit according to any one of the preceding claims, **characterised in that** each lip (24) comprises, at least in the region adjoining the roller (12), an auxiliary lip (38) running parallel to its main crest.

8. Inking unit according to any one of the preceding claims, **characterised in that** the portion of the seal (20) accommodated in the seal holder (18) is in the form of a solid block-shaped base (22), which at one end face abuts with a smooth surface (42) the doctor blade chamber (10) and at the three remaining sides is surrounded by circumferential tolerance-compensating lips (44).

9. Inking unit according to claim 8, **characterised in that** the grooves (46) formed between the tolerance-compensating lips (44) are blocked at the other end face of the base (22) by a rib (48) running at right angles to the tolerance-compensating lips (44).

10. Inking unit according to any one of the preceding claims, **characterised in that** the two lips (24) form an angle of about 80° with one another.

## Revendications

1. Mécanisme d'encrage d'une machine à imprimer, avec une racle à chambre (10) et un joint d'étanchéité sous forme d'un corps en caoutchouc élastique, qui est placé, à l'extrémité de la racle à chambre, dans un porte-garniture (18) et adhère, avec une lèvre (24), posée en biais, sur des couteaux de raclage (16) de la racle à chambre et à la périphérie d'un rouleau (12), contre lequel est posée la racle à chambre, **caractérisé en ce que** le joint d'étanchéité (20) présente une deuxième lèvre (24), qui forme, avec la première, une section transversale en forme de V et que les deux lèvres (24) s'appuient, à une extrémité du rouleau (12), sur sa périphérie et sur les couteaux de raclage (16).

2. Mécanisme d'encrage selon la revendication 1, **caractérisé en ce que** les extrémités opposées des deux lèvres (24) forment des zones d'appui (28) pour les couteaux de raclage (16), qui s'appuient sur la périphérie du rouleau (12) et que la dureté des lèvres (24) augmente dans les zones d'appui (28) jusqu'à l'extrémité.

3. Mécanisme d'encrage selon la revendication 2, **caractérisé en ce que** les peignes principaux des lèvres (24) se confondent, dans les zones d'appui (28), dans un repli (40), qui s'étend autour de l'ensemble du joint d'étanchéité, de sorte qu'il se forme une ligne de contact fermée entre le joint d'étanchéité (20) d'une part et le rouleau (12) et les couteaux de raclage (16) d'autre part.

4. Mécanisme d'encrage selon la revendication 2 ou 3, **caractérisé en ce que** l'intervalle entre les peignes principaux des lèvres (24) est, au milieu, inférieur à celui qui existe entre les extrémités.

5. Mécanisme d'encrage selon la revendication 4, **caractérisé en ce que** la partie du joint d'étanchéité (20), tournée vers le rouleau (12), est constituée dans son ensemble en forme de pyramide et que les deux lèvres (24) sont limitées, côté intérieur, par une entaille (34) en forme de V, qui se termine, dans les zones d'appui (28), dans les surfaces inclinées de la pyramide.

6. Mécanisme d'encrage selon l'une des revendications 2 à 5, **caractérisé en ce que** les lèvres (24) sont limitées respectivement, côté extérieur, par une poche (32), qui, à chaque extrémité, s'étend en partie dans la zone d'appui (28).

7. Mécanisme d'encrage selon l'une des revendications précédentes, **caractérisé en ce que** chaque lèvre (24) présente, au moins dans la zone qui s'appuie sur le rouleau (12), une lèvre auxiliaire (38), qui s'étend parallèlement à son peigne principal.

8. Mécanisme d'encrage selon l'une des revendications précédentes, **caractérisé en ce que** la partie du joint d'étanchéité (20), logée dans le porte-garniture (18), est constituée en tant que socle parallélépipédique massif, qui s'appuie, sur un côté frontal, par une surface lisse (42), contre la racle à chambre (10) et est entourée, sur les trois autres côtés, par des lèvres de compensation de tolérances rotatives (44).

9. Mécanisme d'encrage selon la revendication 8, **caractérisé en ce que** les gorges (46), formées entre les lèvres de compensation de tolérances (44), sont obstruées, sur l'autre côté frontal du socle (22), par une nervure (48), qui s'étend à angles droits par rapport aux lèvres de compensation de tolérances (44).

10. Mécanisme d'encrage selon l'une des revendications précédentes, **caractérisé en ce que** les deux lèvres (24) forment entre elles, un angle d'environ 80°.
